# EUROPEAN PATENT SPECIFICATION

(11) **EP 4 022 129 B1**
(45) Date of publication and mention of the grant of the patent: **29.11.2023**
(21) Application number: 20760458.8
(22) Date of filing: 21.08.2020
(51) Int. Cl.: E01C 9/00, C04B 26/16, C04B 111/00, C08G 18/10, C09D 175/02, C09D 175/04, C08G 18/79, C08G 18/42, C08G 18/38, C08G 18/36, C08G 18/32, C08G 18/50, B64F 1/02

(54) **ENERGY ABSORBING SYSTEM AND METHOD FOR PRODUCING SAME**
ENERGIEAUFNAHMESYSTEM UND VERFAHREN ZUR HERSTELLUNG DESSEN
SYSTÈME D'ABSORPTION D'ÉNERGIE ET SON PROCÉDÉ DE PRODUCTION

(30) Priority: 30.08.2019 EP 19194613; 18.02.2020 EP 20157932
(43) Date of publication of application: 06.07.2022
(73) Proprietor: Runway Safe IPR AB, 400 16 Göteborg (SE)
(72) Inventor: TOMZ, Hubert Klaus, 9500 Villach (AT); PRIMEAUX, Dudley Joseph II, Elgin, Texas 78621 (US)
(74) Representative: AWA Sweden AB
(86) International application number: PCT/EP2020/073531
(87) International publication number: WO 2021/037743

(56) References cited:
- WO-A1-2013/192257
- CN-A- 105 625 126
- GB-A- 1 169 415
- US-A- 3 066 896
- US-A1- 2015 247 298
- US-A1- 2015 251 773

## Description

### TECHNICAL FIELD

The present invention relates to a method for producing an energy absorbing system according to the preamble of claim 1 and an energy absorbing system according to the preamble of claim 15.

### BACKGROUND ART

End of runway aircraft arresting systems are becoming more popular for trapping aircraft when overshooting runways due to speed or weather conditions. To minimize or even avoid the severity of consequences to people and aircrafts in such events at the end of runways a bed of engineered materials can be built. Such engineered materials are usually high energy absorbing materials, which will crush under the weight of an aircraft. The aircraft is slowed by the loss of energy required to crush the engineered material. Current systems typically use cellular cement materials or lightweight aggregate foams made from recycled glass. Among existing solutions, US 2015/251773, CN 105 625 126, US 2015/247298, US 3 066 896, GB 1 169 415 and WO 2013/192257 may be mentioned.

Regularly changing and harsh weather conditions (e.g. sun exposure in summer and freezing temperatures in winter, rain, hail etc.) affect present aircraft arresting systems to become ineffective over the time. Furthermore, light traffic as well as continuing jet blasts from planes taking off may lead to the destruction of currently known arresting systems. In particular, the surface of the current systems does not show sufficient resistance in regard to such environmental and aircraft-caused conditions.

It is an object of the present invention to provide an arrestor system for vehicles, which overcomes the drawbacks of the arrestor systems known in the art and which can be produced quickly in an environmental friendly manner and with limited costs.

### SUMMARY OF THE INVENTION

In accordance with the present invention, there is provided a method for producing an energy absorbing system having the features of claim 1 and an energy absorbing system having the features of claim 15. Further preferred embodiments are defined by the features of dependent claims 2-14.

It turned surprisingly out that an energy absorbing system comprising the above structure shows superior arresting properties compared to other energy absorbing systems known in the art. In particular the use of polyurethane and polyurea layers in combination with a concrete base on a frangible support results in a superior energy absorbing system.

In order to produce the aforementioned energy absorbing system for arresting vehicles layers of concrete, polyurethane and polyurea are applied on a frangible support. The frangible support is deposited on a terrain adjacent or at the end of runways or roads ad streets is a substantially planar manner.

### BRIEF DESCRIPTION OF THE FIGURES

Fig. 1 shows the cross section an energy absorbing system for arresting a vehicle 1 according to the present invention. Said system comprises a concrete subbase 2 positioned on a frangible support 3. At least one polyurethane layer 4 covers said subbase 2 whereby a polyurea layer 5 and an anti-slip layer 6 further cover the polyurethane layer 4.

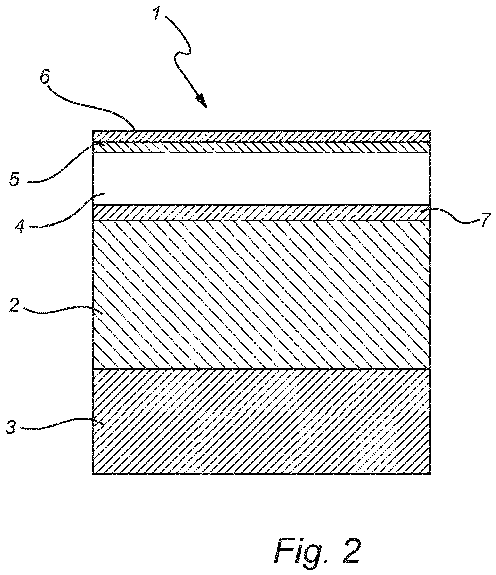

Fig. 2 shows an energy absorbing system for arresting a vehicle as depicted in Fig. 1 comprising an additional levelling layer 7 on the top of the concrete subbase 2.

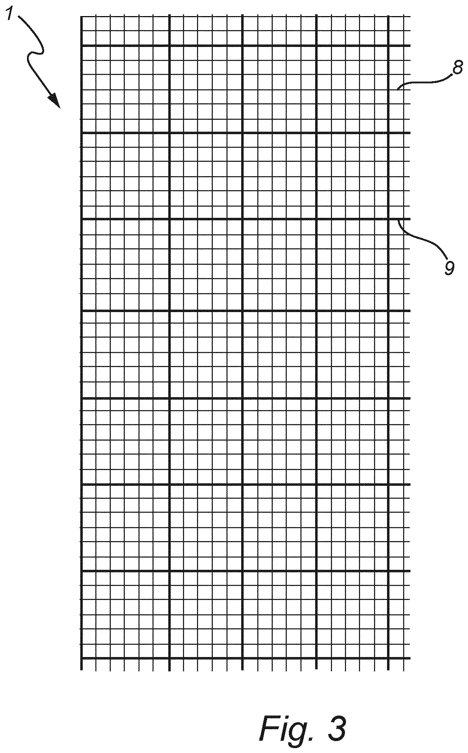

Fig. 3 shows the grid structure of the energy absorbing system for arresting a vehicle 1. The grid structure comprises a first grid 8 of incisions and a second grid 9 of incisions.

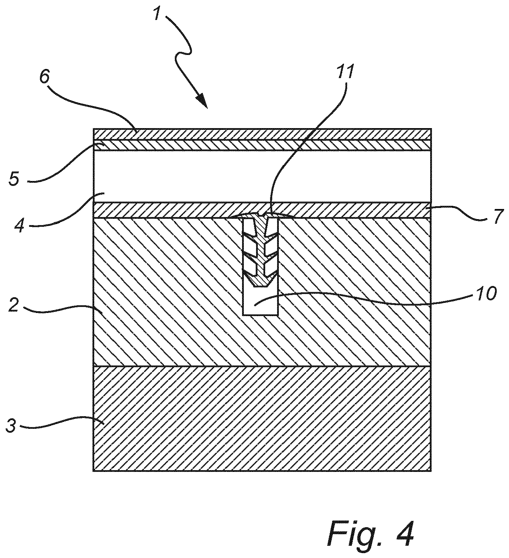

Fig. 4 shows a cross section of an energy absorbing system for arresting a vehicle 1 according to the present invention comprising incisions 10. The incisions 10 may comprise a joint profile 11 positioned therein.

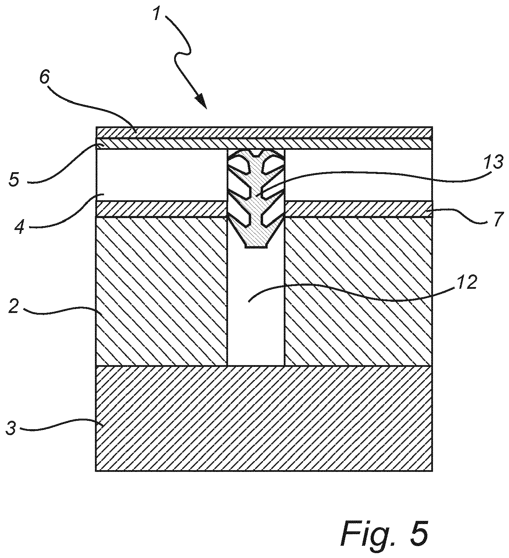

Fig. 5 shows a cross section of an energy absorbing system for arresting a vehicle 1 according to the present invention comprising incisions 11. The incisions 11 may comprise a joint profile 13 positioned therein.

### DESCRIPTION OF EMBODIMENTS

The method of the present invention allows producing energy-absorbing systems for arresting vehicles of any kind. In a first step, concrete is applied on a frangible support to form a concrete subbase. The frangible support itself is usually produced on the terrain, preferably a substantially planar terrain, where the whole system shall be effective.

In a second step of the method of the present invention at least one polyurethane layer is applied on the concrete subbase. Thereby, at least one isocyanate as well as a first composition comprising at least one polyol and at least one catalyst are mixed directly before applying the mixture on the subbase or mixed directly on the concrete subbase by using a.

After the formation of the polyurethane layer in step b. at least one polyurea is formed on said polyurethane layer by applying isocyanate and a second composition comprising at least one polyamine.

The superior properties of the energy absorbing system of the present invention are a result of combining various layers comprising frangible support, concrete, polyurethane and polyurea.

The energy absorbing system of the present invention can be used for arresting vehicles of different types. "Vehicle", as used herein, refers to cars, trucks, aircrafts and the like. Hence, the system of the present invention can be used to arrest vehicles like cars, trucks and aircrafts.

"At least one isocyanate", "at least one polyol", "at least one polyamine" and "at least one catalyst", as used herein, means that one or more different types of isocyanates, polyols, polyamines and catalysts, respectively, can be used in the method of the present invention.

The at least one isocyanate and the various compositions can be applied on a surface by using a brush, a roller, a spray or any other appropriate application technique, whereby the application using a spray is most preferred. In addition, the application of concrete on the frangible support can be done by using a spray or any other known technique typically used for applying concrete on a surface.

According to a preferred embodiment of the present invention in a step a1. a levelling composition is applied on the concrete subbase after step a. forming a levelling layer.

The application of a levelling composition on the concrete subbase is useful to close its pores and to provide a better binding of the polyurea layer.

According to a preferred embodiment of the present invention at least one isocyanate and a third composition comprising at least one polyol is applied on the concrete subbase after step a. or after step a1. and optionally on the polyurethane layer after step b., wherein the third composition is substantially water-free.

The at least one isocyanate and the third composition ("primer system") are designed to seal the surface of the concrete so as to eliminate any pinholing in the subsequent layers of the system, and keep water penetration from occurring. Furthermore, the aforementioned combination of the at least one isocyanate and the third composition can also be applied on the polyurethane layer resulting in a much more better binding between these layers.

According to another preferred embodiment of the present invention, at least one isocyanate and a fourth composition comprising at least one polyamine and at least one air release agent is applied on the polyurea layer to obtain an anti-slip layer.

The provision of a polyurea layer on top of the arresting system is advantageous in relation to color stability and the ability to incorporate fine aggregate for slip resistance.

According to a preferred embodiment of the present invention the concrete comprises limestone having a maximum compression strength of less than 200 N/mm², preferably less than 150 N/mm², more preferably less than 100 N/mm².

A maximum compression strength of less than 200 N/mm² is advantageous because it can break under the pressure caused by a vehicle like an aircraft, truck or bus.

According to a further preferred embodiment of the present invention the concrete comprises limestone having an average particle size of 0.01 to 20 mm, preferably 0.02 to 15 mm, more preferably 0.05 to 10 mm, more preferably from 0.1 to 8 mm.

The limestone present in the concrete subbase has preferably an average particle size of less than 20 mm. This size limitation is advantageous in regard to breakage of the subbase when pressure is applied.

It turned surprisingly out that the use of concrete which is substantially free of quartz showed better results in regard to the breaking properties under pressure. Furthermore, quartz/sand may have negative environmental effects in regard to particle pollution and dust which can be harmful for breathing.

"Substantially free", as used herein, means that the concrete comprises less than 5 wt%, preferably less than 2 wt%, more preferably less than 1 wt%, quartz.

According to another further preferred embodiment of the present invention the concrete comprises cement. Cement is a common binder in concrete which is preferably used for producing the concrete subbase.

The concrete is applied on the support in a thickness of 10 to 400 mm, preferably 15 to 300 mm, more preferably 20 to 200 mm, more preferably 10 to 100 mm, more preferably 15 to 80 mm, more preferably 20 to 60 mm.

It turned out that the thickness of the concrete subbase shall be 400 mm or less, preferably 60 mm or less, to influence positively the breakage under pressure.

According to a further preferred embodiment of the present invention the frangible support comprises rocks with an average grain size of 1 to 10 cm, preferably 2 to 8 cm, more preferably 3 to 6, more preferably 4 to 5 cm, and/or foam glass.

The use of such frangible support is particularly advantageous because of its contribution to absorb the kinetic energy from the vehicles.

Foam glass used in the system of the present invention may be made from inorganic non-metallic glass material. Due to the foam structure the foam glass comprises a large number of bubble structures with a diameter ranging from 0.1 to 5 mm, preferably from 0.2 to 4 mm, more preferably from 0.5 to 3 mm, more preferably from 1 to 2 mm. The foam glass of the present invention may comprise open and/or closed cell bubbles. Methods for producing such foam glass are well known in the art.

According to a further preferred embodiment of the present invention the first composition comprises 60 to 95 wt%, preferably 70 to 90 wt%, of the at least one polyol, and 1 to 5 wt%, preferably 2 to 4 wt%, of the at least one catalyst.

According to another preferred embodiment of the present invention the first composition comprises 1 to 3 wt%, preferably 1.2 to 2 wt%, of a surfactant, preferably of a silicone surfactant.

Surfactants are preferably used to aid in the development of consistent closed cell structure in the first composition which is preferably applied or prepared as a foam.

The surfactant is preferably selected from the group consisting of silicone based surfactants and organic non-ionic surfactants.

It is preferred to apply polyurethane in the form of a foam. Making a foam requires the formation of a gas at the same time as the urethane polymerization is occurring. The gas can be carbon dioxide, either generated by reacting isocyanate with water or added as a gas. According to the present invention the addition of water is preferred.

Hence, according to a preferred embodiment of the present invention the first composition comprises 1 to 5 wt%, preferably 1.2 to 3 wt%, more preferably 1.5 to 2 wt%, water.

According to another preferred embodiment of the present invention the first composition comprises 5 to 20 wt%, preferably 10 to 20 wt%, more preferably 11 to 15 wt%, of a fire retardant.

In order to render the energy absorbing system of the present invention heat resistant the first composition of the present invention may comprise fire retardants.

The fire retardant is preferably selected from the group consisting of tris(chloropropyl) phosphate, aluminium trihydrate, antimony oxide and sodium borate.

According to a further preferred embodiment of the present invention the at least one isocyanate and the first composition are combined during step b. in a ratio of 0.1:1 to 5:1, preferably 0.5:1 to 4:1, more preferably 0.8:1 to 2.5:1, more preferably 0.9:1 to 1.1:1.

According to another preferred embodiment of the present invention the at least one isocyanate and the first composition is applied on the concrete subbase to obtain a polyurethane layer in a thickness of 1 to 50 mm, preferably 1 to 40 mm, more preferably 1 to 30 mm, more preferably 1 to 20 mm, more preferably 1 to 15 mm, more preferably 5 to 10 mm.

It turned out that it is advantageous in regard to breakage that the polyurethane layer has a thickness within these limits.

The polyamine of the second composition is preferably selected from the group consisting of polyoxypropylenediamine, diethyltoluenediamine, methylenedianaline, polyoxypropylene triamine, substituted methylenedianaline and secondary methylenedianaline.

According to a preferred embodiment of the present invention the second composition comprises 60 to 100 wt%, preferably 65 to 95 wt%, more preferably 65 to 90 wt%, of the at least one polyamine.

According to another preferred embodiment of the present invention the second composition comprises 2 to 20 wt%, preferably 5 to 15 wt%, more preferably 5 to 10 wt%, of a fire retardant.

In order to make the upper layers of the energy absorbing system of the present invention fire resistant, the second composition comprises at least one fire retardant.

The fire retardant is selected from the group consisting of tris(chloropropyl) phosphate, aluminium trihydrate, antimony oxide and sodium borate.

According to a preferred embodiment of the present invention the at least one isocyanate and the second composition are combined during step c. in a ratio of 0.5:1.5 to 1.5:0.5, preferably 1:1.

According to another preferred embodiment of the present invention, the at least one isocyanate and the second composition are applied on the polyurethane layer to obtain a polyurea layer in a thickness of 0.1 to 10 mm, preferably 0.2 to 5 mm, more preferably 0.5 to 3 mm, more preferably 0.5 to 2 mm, more preferably 0.5 to 1.2 mm, more preferably 0.5 to 1 mm.

According to a preferred embodiment of the present invention the at least one polyol of the third composition is a hydroxyl group comprising triglyceride or fatty acid preferably selected from the group consisting of castor oil, ricolinoeic acid, cashew nut oil and soy based polyol.

The use of natural sources of fatty acids renders the method of the present invention much more environmental friendly compared to other methods known in the art, which use synthetic hydroxyl group donors.

According to another preferred embodiment of the present invention the at least one isocyanate and the at least one polyol of the third composition are applied on the concrete subbase and/or optionally on the polyurethane layer in a ratio of 0.5:1.5 to 1.5:0.5, preferably 1:1.

According to a preferred embodiment of the present invention the at least one polyamine of the fourth composition is selected from the group consisting of a polyaspartic ester, preferably based on methylene dicyclohexyl amines.

According to another preferred embodiment of the present invention the at least one air release agent of the fourth composition is selected from the group consisting of silicone based release agents, preferably methylated silica and/or dimethyl silicone polymers.

According to a preferred embodiment of the present invention the at least one isocyanate and the fourth composition are applied on the polyurea layer (4) in a ratio of 0.5:2 to 2:0.5, preferably 1:1.5.

The at least one isocyanate and the fourth composition are applied on the polyurea layer (4) in a thickness of 0.1 to 2 mm, preferably 0.25 to 1 mm.

According to a preferred embodiment of the present invention the at least one isocyanate is selected from the group of isocyanates consisting of aliphatic isocyanates selected from the group consisting of methylene diisocyanate, a bifunctional monomer of tetraalkyl xylene diisocyanate, cyclohexan diisocyanate, 1,12-dodecane diisocyanate, 1,4-tetramethylene diisocyanate, isophorone diisocyanate, and dicyclohexylmethane diisocyanate; aromatic isocyanates selected from the group consisting of m-phenylene diisocyanate, p-phenylene diisocyanate, polymethylene polyphenylisocyanate, 2,4-toluene diisocyanate, 2,6-toluene diisocyanate, dianisidine diisocyanate, bitolylene diisocyanate, naphthalene-1,4-diisocyanate, and diphenylene-4,4'-diisocyanate; and aliphatic/aromatic diisocyanates selected from the group consisting of xylylene-1,3-diisocyanate, bis(4-isocyanatophenyl)methane, bis(3-methyl-4-isocyanatophenyl)methane, and 4,4'-diphenylpropane diisocyanate;and mixtures thereof.

According to a preferred embodiment of the present invention the at least one isocyanate of step c. is an aromatic isocyanate.

Aromatic isocyanates turned out to be advantageous in forming a substantially rigid spray foam. Aliphatic isocyanates are too slow in reactivity to make a foam system for this purpose.

According to a preferred embodiment of the present invention the levelling composition comprises a mixture of the at least one polyol and the at least one polyamine in a ratio from 2:1 to 6:1, preferably from 3:1 to 5:1, more preferably from 3.5:1 to 4.5:1.

A mixture of polyols and polyamines in the levelling composition is particular advantageous because it allows to obtain a composition which shows good rheological properties when applying the composition on a concrete surface to give a smooth and flat surface.

According to a preferred embodiment of the method according to the present invention, a first grid 8 of incisions 10 is formed in the concrete subbase 2, wherein the incisions 10 of the first grid 8 originate at a surface of the concrete subbase 2 opposite to the frangible support 3, and extend towards the frangible support 3, having a depth preferably smaller than a thickness of the concrete subbase 2.

The method according to the present invention preferably includes the step of forming a second grid 9 of incisions 12, wherein the incisions 12 of the second grid 9 originate at a surface of the polyurea layer 5 opposite to the polyurethane layer 4, and extend through the polyurea layer 5, the polyurethane layer 4 and the concrete subbase 2 until the frangible support 3.

The incisions 10 of the first grid 8 act as contraction joints, and the incisions 12 of the second grid 9 act as dilatation joints. Cracks in the structure of the energy absorbing system are likely to cause an increasingly rapid degradation of the system, especially when exposed to rain and/or snow due to chemical reactions which may occur within the concrete, or by exposing a cracked system according to the invention to additional mechanical stress by the formation of ice within these cracks during winter.

Due to thermal stress exhibited by the energy absorbing system according to the invention, when exposed for example to sunlight or other sources of heat or thermal radiation, and on the other hand low temperatures during winter or in cold climates, a gradual degradation of the structural cohesion and the formation of cracks within the energy absorbing system is likely to occur. The inclusion of the first grid 8 of incisions 10, which act as contraction joints, alleviates thermal stress caused by the expansion of the concrete subbase 2 and prevents the formation of such cracks or structural defects caused by heat. The incisions 10 of the first 8 grid have a depth, which is preferably smaller than a thickness of the concrete subbase 2. This design accounts for temperature gradients within the concrete subbase 2, which lead to an increased expansion of the concrete subbase 2 closer to the surface of the energy absorbing system, which is often directly exposed to heat and thermal radiation.

The incisions 12 of the second grid 9 act as dilatation joints, alleviating thermal stress caused by a contraction of the energy absorbing system, when exposed to low temperatures. In cold conditions, the energy absorbing system contracts in an essentially uniform manner throughout its thickness. Therefore the incisions 12 of the second grid 9 extend through the polyurea layer 5, the polyurethane layer 4 and the concrete layer 2 until the frangible support 3.

According to a preferred embodiment, a joint profile 11, 13 comprises or consists of ethylene propylene diene monomer (EPDM) rubber.

A further aspect of the present invention relates to an energy absorbing system for arresting a vehicle comprising a concrete subbase 2 positioned on a frangible support 3 and being covered with at least one polyurethane layer 4 and at least one polyurea layer (5).

It turned surprisingly out that a system comprising the above layers on a frangible support shows superior energy absorbing properties than other energy absorbing systems known in the art. The interplay of polyurethane layers and polyurea layers on a frangible support turned out to be advantageous.

According to a preferred embodiment of the present invention the at least one polyurethane layer 4 is covered with at least one polyurea layer 5.

It is particular advantageous that at least one polyurethane layer of the energy absorbing system of the present invention is covered with at least one polyurea layer. In particular this order of the two layers turns in an energy absorbing system suitably used for heavy vehicles like aircrafts which shows resistance in regard to environmental influences, for instance.

The method of the present invention allows to obtain an energy absorbing system for arresting a vehicle where the surface of the energy absorbing system is substantially jointless.

The polyurea layer 5 is preferably covered with an anti-slip layer comprising polyurea.

The energy absorbing system of the present invention can be used at the end of air runways or even roads. In order to enable people or light vehicles to move on such a system the at least one polyurea layer is preferably covered with an anti-slip layer which may also comprise polyurea.

The energy absorbing system of the present invention can be part of runways at airports. Preferably, said energy absorbing system covers an area having a length of 20 to 500 meters and a width of 20 to 100 meters.

The energy absorbing system of the present invention can also be installed on roads and streets to stop or decelerate vehicles. This may be helpful for trucks or buses having, for instance, broken breaks so that they can leave the streets or roads on an emergency exit where the energy absorbing system of the present invention is positioned. The energy absorbing system of the present invention can also be used to protect certain areas from a non-authorized vehicle.

The present invention is further illustrated by the following example, however, without being restricted thereto.

### EXAMPLE

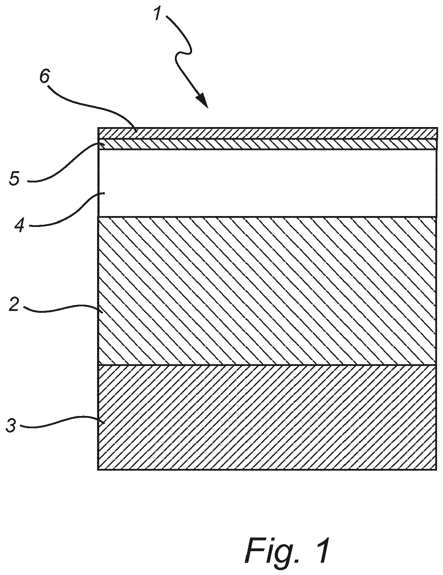

The present example shows how the energy absorbing system of the present invention (see Fig. 1) was manufactured.

### Concrete Subbase 2

The concrete subbase 2 was applied at a thickness of 20 to 200 mm, with a desired thickness of 40 - 60 mm, on a frangible support 3.

### Primer System

The primer system was designed to seal the surface of the placed concrete subbase 2 so as to eliminate any pinholing in the subsequent layers of the system, and keep water penetration from occurring. However, the primer can also be used for coating the polyurethane layer. This primer was composed of 100% solids (without water), and was based upon an aromatic polymeric isocyanate and a renewable resource polyol, i.e. castor oil. This has significant environmental advantages. While the primer is applied, it is designed to soak into the concrete and seal, and not provide a coating thickness layer.

The primer was installed at a spreading rate of 0.13 to 0.5 liters/m², with a desired spreading rate of 0.2 to 0.25 liters/m². The primer was applied by brush or roller, high pressure airless spray or plural component spray.

The primer was based upon an aromatic Isocyanate component, such as SUPRASEC 9584 from Huntsman Corporation. This is an isocyanate component having an isocyanate content of 24.1%, reactive functionality of 2.67, and an equivalent weight of 174, viscosity of 45 cps @ 25°C.

The resin component was Castor Oil #1, Ricinus Cumminus Seed Oil, with a hydroxyl value of 60 - 100, a viscosity of 200 - 600 cps @ 25°C.

The isocyanate and resin are mixed at a 1:1 by volume ratio, and applied to the substrate as noted above.

### Polyurethane layer 4:

The spray foam system was a specialty modified isocyanurate spray foam, being frangible and highly fire retardant, resistance to burning. This foam system was based upon a polymeric aromatic isocyanate and a resin blend of polyol, catalyst and water blown. This system did not use any additional organic blowing agents, and is environmentally friendly, using only water for expansion / blowing.

This spray foam system was processed at a ratio of 200:100 to 400:100 (isocyanate to Resin / polyol), with a desired processing ratio of 200:100 to 250:100. Application thickness of the foam can be from 15 to 40 mm, with a desired application thickness of 20 to 30 mm thickness.

The foam system can be applied to the primer system once the primer is tack free (usually within 1.5 hours). The foam system is applied using high pressure, heated variable ratio plural component equipment, fitted with an impingement mix spray gun.

This system was based upon the following formulation:

### Isocyanate Component:

| | |
|---|---|
| Polymeric MDI, | 100 parts by weight such as RUBINATE M from Huntsman Corp |

### Resin Blend:

| | |
|---|---|
| PET based polyol | 70 - 90 parts by weight (Hydroxyl Number of 250) |
| Water | 1.5 - 2.0 parts by weight |
| Trischloropropyl | 11 - 15 parts by weight Phosphate (fire retardant) |
| Silicone surfactant | 1.3 - 1.8 parts by weight |
| JEFFCAT TR 90 | 1.6 - 1.8 parts by weight |
| JEFFACT ZF 10 | 0.5 - 0.7 parts by weight (Catalysts, both from Huntsman) |
| POLYCAT 34 | 0.6 - 0.8 parts by weight (catalyst from Evonik) |
| Potassium Octoate | 0.4 - 0.8 parts by weight (trimer formation catalyst) |

This spray foam system was processed at a volume ratio of 200:100 to 400:100 (ISO to Resin / polyol), with a desired processing volume ratio of 200:100 to 250:100.

### Polyurea Layer 5:

The polyurea coating system is an aromatic based polyurea with properties designed to provide good elasticity and strength, even at low temperature exposure, such as freezing weather. This is a plural component system, based upon an aromatic prepolymer isocyanate and a resin blend composed of amine terminated resins. This is a 100% solids system, with very fast reactivity and cure.

Application of the polyurea system can be from 0.5 to 2.0 mm, with a desired application thickness of .5 to 1.0 mm. The system is applied using high pressure, heated plural component equipment, fitted with an impingement mix spray gun.

This system was based upon the following formulation:

### Isocyanate Component:

| | |
|---|---|
| SUPRASEC 2054 | 100 parts by weight (from Huntsman Corp, 15 % isocyanate content, functionality of 2.0) |

### Resin blend side:

| | |
|---|---|
| JEFFAMINE D-2000 | 50 - 70 parts by weight (2000 molecular weight polyether amine from Huntsman Corp) |
| LONZA DETDA | 17 - 20 parts by weight (Lonza corp, diethyltoluene diamine) |
| UNILINK 4200 | 5 - 10 parts by weight (Dorf Ketal, secondary amine based on methylene dianaline) |
| Aluminum Trihydrate | 5 - 10 parts by weight (Fire retardant for Clariant) |
| Pigment color | 2 - 5 parts by weight |
| Gel Time, secs | 5 - 10 |
| Tack free time, sec | - 45 |

This system is processed at a 1:1 by volume ratio in the high pressure, high temperature proportioning spray equipment

### Anti-slip Coat:

A top coat can be applied over the polyurea system. This will provide color stability and the ability to incorporate fine aggregate for slip resistance. This was based upon an aliphatic polyurea system, using polyaspartic ester resins. Application thickness of the top coat was from 0.25 to 1 mm DFT, with a desired application thickness of 0.4 to 0.6 mm DFT. This can be applied by brush or roller, high pressure airless spray or plural component spray. The applied aggregate ranges from 0.2 - 0.5 mm, with 0.3 to 0.4 mm preferred.

This system was based upon the following formulation:

### Isocyanate component:

| | |
|---|---|
| HDI Trimer | 100 parts by weight (such as DESMODUR 3900, N-100 or Tolonate HDT-LV) |

### Resin blend component:

| | |
|---|---|
| DESMOPHEN NH-1420 | 55 - 65 parts by weight |
| DESMOPHEN NH-1520 | 35 - 40 parts by weight (polyaspartic ester from Bayer) |
| Silquest A-1100 | 0.5 - 1.0 parts by weight |
| | (amino silane adhesion promoter from Momentive) |
| BYK 354 | 1.7 - 2.2 parts by weight |
| | (air release agent - Byk Chemie) |
| Airex 900 | 1.4 - 1.7 parts by weight |
| | (air release agent - Goldschmidt Chemical) |
| Mix ratio, By volume | 1.0 ISO : 1.5 Resin |
| Gel Time, Minutes | 30 - 35 minutes |
| Tack free, hours | 1.0 - 1.5 hours |

## Claims

1. Method for producing an energy absorbing system (1) for arresting a vehicle **characterized in** comprising the steps of
a. applying concrete on a frangible support (3) to form a concrete subbase (2),
b. applying at least one isocyanate and a first composition comprising at least one polyol and at least one catalyst to form a polyurethane layer (4) on said concrete subbase (2), and
c. applying at least one isocyanate and a second composition comprising at least one polyamine to form a polyurea layer (5) on said polyurethane layer (4).

2. Method according to claim 1, wherein in a step a1. a levelling composition is applied on the concrete subbase (2) after step a. forming a levelling layer (7).

3. Method according to claim 1 or 2, wherein at least one isocyanate and a third composition comprising at least one polyol is applied on the concrete subbase (2) after step a. or after step a1. and optionally on the polyurethane layer (4) after step b., wherein the third composition is substantially water-free.

4. Method according to any one of claims 1 to 3, wherein at least one isocyanate and a fourth composition comprising at least one polyamine and at least one air release agent is applied on the polyurea layer (5) to obtain an anti-slip layer (6).

5. Method according to any one of claims 1 to 4, wherein the first composition comprises 1 to 3 wt%, preferably 1.2 to 2 wt%, of a surfactant, preferably of a silicone surfactant.

6. Method according to any one of claims 1 to 5, wherein the first composition comprises 1 to 5 wt%, preferably 1.2 to 3 wt%, more preferably 1.5 to 2 wt%, water and/or 5 to 20 wt%, preferably 10 to 20 wt%, more preferably 11 to 15 wt%, of a fire retardant.

7. Method according to any one of claims 1 to 6, wherein the at least one isocyanate and the first composition is applied on the concrete subbase (2) to obtain a polyurethane layer (4) in a thickness of 1 to 50 mm, preferably 1 to 40 mm, more preferably 1 to 30 mm, more preferably 1 to 20 mm, more preferably 1 to 15 mm, more preferably 5 to 10 mm.

8. Method according to any one of claims 1 to 7, wherein the at least one isocyanate and the second composition are applied on the polyurethane layer (4) to obtain a polyurea layer (4) in a thickness of 0.1 to 10 mm, preferably 0.2 to 5 mm, more preferably 0.5 to 3 mm, more preferably 0.5 to 2 mm, more preferably 0.5 to 1.2 mm, more preferably 0.5 to 1 mm.

9. Method according to any one of claims 4 to 8, wherein the at least one air release agent of the fourth composition is selected from the group consisting of silicone based release agents, preferably methylated silica and/or dimethyl silicone polymers.

10. Method according to any one of claims 3 to 9, wherein the at least one isocyanate and the fourth composition are applied on the polyurea layer (4) in a thickness of 0.1 to 2 mm, preferably 0.25 to 1 mm.

11. Method according to any one of claims 2 to 10, wherein the levelling composition comprises a mixture of the at least one polyol and the at least one polyamine in a ratio from 2:1 to 6:1, preferably from 3:1 to 5:1, more preferably from 3.5:1 to 4.5:1.

12. Method according to any one of claims 1 to 11, wherein a first grid (8) of incisions (10) is formed in the concrete subbase (2), wherein the incisions (10) of the first grid (8) originate at a surface of the concrete subbase (2) opposite to the frangible support (3), and extend towards the frangible support (3), having a depth preferably smaller than a thickness of the concrete subbase (2).

13. Method according to any of claims 1 to 12, wherein a second grid (9) of incisions (12) is formed, wherein the incisions (12) of the second grid (9) originate at a surface of the polyurea layer (5) opposite to the polyurethane layer (4), and extend through the polyurea layer (5), the polyurethane layer (4) and the concrete subbase (2) until the frangible support (3).

14. Method according to claim 13, wherein the joint profile (11, 13) comprises or consists of ethylene propylene diene monomer (EPDM) rubber.

15. An energy absorbing system for arresting a vehicle (1) **characterized in** comprising a concrete subbase (2) positioned on a frangible support (3) and being covered with at least one polyurethane layer (4) and at least one polyurea layer (5).

## Patentansprüche

1. Verfahren zur Herstellung eines energieabsorbierenden Systems (1) zum Arretieren eines Fahrzeugs, **gekennzeichnet durch** Umfassen der Schritte:
a. Aufbringen von Beton auf einen brechbaren Träger (3), um einen Beton-Unterbau (2) zu bilden,
b. Aufbringen wenigstens eines Isocyanats und einer ersten Zusammensetzung, die wenigstens ein Polyol und wenigstens einen Katalysator umfasst, um eine Polyurethanschicht (4) zu bilden, auf den Beton-Unterbau (2) und
c. Aufbringen wenigstens eines Isocyanats und einer zweiten Zusammensetzung, die wenigstens ein Polyamin umfasst, um eine Polyharnstoffschicht (5) zu bilden, auf die Polyurethanschicht (4).

2. Verfahren gemäß Anspruch 1, wobei bei einem Schritt a1. nach Schritt a. eine Einebnungszusammensetzung auf den Beton-Unterbau (2) aufgebracht wird, um eine Einebnungsschicht (7) zu bilden.

3. Verfahren gemäß Anspruch 1 oder 2, wobei wenigstens ein Isocyanat und eine dritte Zusammensetzung, die wenigstens ein Polyol umfasst, nach Schritt a. oder nach Schritt a1. auf den Beton-Unterbau (2) und gegebenenfalls nach Schritt b. auf die Polyurethanschicht (4) aufgebracht wird, wobei die dritte Zusammensetzung im Wesentlichen wasserfrei ist.

4. Verfahren gemäß einem der Ansprüche 1 bis 3, wobei wenigstens ein Isocyanat und eine vierte Zusammensetzung, die wenigstens ein Polyamin und wenigstens einen Entlüfter umfasst, auf die Polyharnstoffschicht (5) aufgebracht wird, um eine rutschhemmende Schicht (6) zu erhalten.

5. Verfahren gemäß einem der Ansprüche 1 bis 4, wobei die erste Zusammensetzung 1 bis 3 Gew.-%, vorzugsweise 1,2 bis 2 Gew.-%, an einem Tensid, vorzugsweise an einem Silicon-Tensid, umfasst.

6. Verfahren gemäß einem der Ansprüche 1 bis 5, wobei die erste Zusammensetzung 1 bis 5 Gew.-%, vorzugsweise 1,2 bis 3 Gew.-%, bevorzugter 1,5 bis 2 Gew.-%, Wasser und/oder 5 bis 20 Gew.-%, vorzugsweise 10 bis 20 Gew.-%, bevorzugter 11 bis 15 Gew.-%, an einem ersten Flammhemmer umfasst.

7. Verfahren gemäß einem der Ansprüche 1 bis 6, wobei das wenigstens eine Isocyanat und die erste Zusammensetzung auf den Beton-Unterbau (2) aufgebracht werden, um eine Polyurethanschicht (4) mit einer Dicke von 1 bis 50 mm, vorzugsweise 1 bis 40 mm, bevorzugter 1 bis 30 mm, bevorzugter 1 bis 20 mm, bevorzugter 1 bis 15 mm, bevorzugter 5 bis 10 mm, zu erhalten.

8. Verfahren gemäß einem der Ansprüche 1 bis 7, wobei das wenigstens eine Isocyanat und die zweite Zusammensetzung auf die Polyurethanschicht (4) aufgebracht werden, um eine Polyharnstoffschicht (4) mit einer Dicke von 0,1 bis 10 mm, vorzugsweise 0,2 bis 5 mm, bevorzugter 0,5 bis 3 mm, bevorzugter 0,5 bis 2 mm, bevorzugter 0,5 bis 1,2 mm, bevorzugter 0,5 bis 1 mm, zu erhalten.

9. Verfahren gemäß einem der Ansprüche 4 bis 8, wobei der wenigstens eine Entlüfter der vierten Zusammensetzung ausgewählt ist aus der Gruppe bestehend aus Freigabemitteln auf Siliconbasis, vorzugsweise methyliertes Siliciumdioxid und/oder Dimethylsiliconpolymere.

10. Verfahren gemäß einem der Ansprüche 3 bis 9, wobei das wenigstens eine Isocyanat und die vierte Zusammensetzung auf die Polyharnstoffschicht (4) in einer Dicke von 0,1 bis 2 mm, vorzugsweise 0,25 bis 1 mm, aufgebracht werden.

11. Verfahren gemäß einem der Ansprüche 2 bis 10, wobei die Einebnungszusammensetzung ein Gemisch des wenigstens einen Polyols und des wenigstens einen Polyamins in einem Verhältnis von 2:1 bis 6:1, vorzugsweise von 3:1 bis 5:1, bevorzugter von 3,5:1 bis 4,5:1, umfasst.

12. Verfahren gemäß einem der Ansprüche 1 bis 11, wobei ein erstes Gitter (8) von Einschnitten (10) in dem Beton-Unterbau (2) gebildet wird, wobei die Einschnitte (10) des ersten Gitters (8) von einer Oberfläche des Beton-Unterbaus (2) gegenüber dem brechbaren Träger (3) ausgehen und in Richtung zu dem brechbaren Träger (3) verlaufen und eine Tiefe aufweisen, die vorzugsweise kleiner als eine Dicke des Beton-Unterbaus (2) ist.

13. Verfahren gemäß einem der Ansprüche 1 bis 12, wobei ein zweites Gitter (9) von Einschnitten (12) gebildet wird, wobei die Einschnitte (12) des zweiten Gitters (9) von einer Oberfläche der Polyharnstoffschicht (5) gegenüber der Polyurethanschicht (4) ausgehen und durch die Polyharnstoffschicht (5), die Polyurethanschicht (4) und den Beton-Unterbau (2) bis zu dem brechbaren Träger (3) verlaufen.

14. Verfahren gemäß Anspruch 13, wobei das Fugenprofil (11, 13) Ethylen-Propylen-Dien-Monomer(EPDM)-Kautschuk umfasst oder daraus besteht.

15. Energieabsorbierendes Systems zum Arretieren eines Fahrzeugs (1), **gekennzeichnet durch** Umfassen eines Beton-Unterbaus (2), der auf einem brechbaren Träger (3) angeordnet ist und von wenigstens einer Polyurethanschicht (4) und wenigstens einer Polyharnstoffschicht (5) bedeckt ist.

## Revendications

1. Procédé pour la production d'un système d'absorption d'énergie (1) pour l'arrêt d'un véhicule **caractérisé en ce qu'**il comprend les étapes de
a. application de béton sur un support cassable (3) pour former une sous-base de béton (2),
b. application d'au moins un isocyanate et d'une première composition comprenant au moins un polyol et au moins un catalyseur pour former une couche de polyuréthane (4) sur ladite sous-base de béton (2), et
c. application d'au moins un isocyanate et d'une deuxième composition comprenant au moins une polyamine pour former une couche de polyurée (5) sur ladite couche de polyuréthane (4).

2. Procédé selon la revendication 1, dans une étape a1. une composition de nivellement étant appliquée sur la sous-base de béton (2) après l'étape a., formant une couche de nivellement (7).

3. Procédé selon la revendication 1 ou 2, au moins un isocyanate et une troisième composition comprenant au moins un polyol étant appliqués sur la sous-base de béton (2) après l'étape a. ou après l'étape a1. et éventuellement sur la couche de polyuréthane (4) après l'étape b., la troisième composition étant sensiblement exempte d'eau.

4. Procédé selon l'une quelconque des revendications 1 à 3, au moins un isocyanate et une quatrième composition comprenant au moins une polyamine et au moins un agent de libération d'air étant appliqués sur la couche de polyurée (5) pour obtenir une couche anti-glissement (6).

5. Procédé selon l'une quelconque des revendications 1 à 4, la première composition comprenant 1 à 3 % en poids, préférablement 1,2 à 2 % en poids, d'un tensioactif, préférablement d'un tensioactif de silicone.

6. Procédé selon l'une quelconque des revendications 1 à 5, la première composition comprenant 1 à 5 % en poids, préférablement 1,2 à 3 % en poids, plus préférablement 1,5 à 2 % en poids d'eau et/ou 5 à 20 % en poids, préférablement 10 à 20 % en poids, plus préférablement 11 à 15 % en poids d'un agent ignifugeant.

7. Procédé selon l'une quelconque des revendications 1 à 6, l'au moins un isocyanate et la première composition étant appliqués sur la sous-base de béton (2) pour obtenir une couche de polyuréthane (4) en une épaisseur de 1 à 50 mm, préférablement 1 à 40, plus préférablement 1 à 30 mm, plus préférablement 1 à 20 mm, plus préférablement 1 à 15 mm, plus préférablement 5 à 10 mm.

8. Procédé selon l'une quelconque des revendications 1 à 7, l'au moins un isocyanate et la deuxième composition étant appliqués sur la couche de polyuréthane (4) pour obtenir une couche de polyurée (4) en une épaisseur de 0,1 à 10 mm, préférablement de 0,2 à 5 mm, plus préférablement de 0,5 à 3 mm, plus préférablement de 0,5 à 2 mm, plus préférablement de 0,5 à 1,2 mm, plus préférablement de 0,5 à 1 mm.

9. Procédé selon l'une quelconque des revendications 4 à 8, l'au moins un agent de libération d'air de la quatrième composition étant choisi dans le groupe constitué par des agents de libération à base de silicone, préférablement une silice méthylée et/ou des polymères de diméthylsilicone.

10. Procédé selon l'une quelconque des revendications 3 à 9, l'au moins un isocyanate et la quatrième composition étant appliqués sur la couche de polyurée (4) en une épaisseur de 0,1 à 2 mm, préférablement de 0,25 à 1 mm.

11. Procédé selon l'une quelconque des revendications 2 à 10, la composition de nivellement comprenant un mélange de l'au moins un polyol et de l'au moins une polyamine en un rapport de 2 : 1 à 6 : 1, préférablement de 3 : 1 à 5 : 1, plus préférablement de 3,5 : 1 à 4,5 : 1.

12. Procédé selon l'une quelconque des revendications 1 à 11, une première grille (8) d'incisions (10) étant formée dans la sous-base de béton (2), les incisions (10) de la première grille (8) prenant naissance au niveau d'une surface de la sous-base de béton (2) à l'opposé du support cassable (3), et s'étendant vers le support cassable (3), ayant une profondeur préférablement plus petite qu'une épaisseur de la sous-base de béton (2).

13. Procédé selon l'une quelconque des revendications 1 à 12, une deuxième grille (9) d'incisions (12) étant formée, les incisions (12) de la deuxième grille (9) prenant naissance au niveau d'une surface de la couche de polyurée (5) à l'opposé de la couche de polyuréthane (4), et s'étendant à travers la couche de polyurée (5), la couche de polyuréthane (4) et la sous-base de béton (2) jusqu'au support cassable (3) .

14. Procédé selon la revendication 13, le profil du joint (11, 13) comprenant ou étant constitué de caoutchouc de monomères d'éthylène propylène diène (EPDM).

15. Système d'absorption d'énergie pour l'arrêt d'un véhicule (1) **caractérisé en ce qu'**il comprend une sous-base de béton (2) positionnée sur un support cassable (3) et est couvert par au moins une couche de polyuréthane (4) et au moins une couche de polyurée (5).
